(19) Europäisches Patentamt
European Patent Office
Office européen des brevets

(11) Publication number: **0 332 400 B1**

(12) # EUROPEAN PATENT SPECIFICATION

(45) Date of publication of patent specification: **30.11.94**

(51) Int. Cl.5: **C08K 5/54**, C08L 83/14, C08L 83/07

(21) Application number: **89302270.7**

(22) Date of filing: **07.03.89**

(54) **Photocurable organopolysiloxane composition.**

(30) Priority: **07.03.88 JP 53219/88**
**07.03.88 JP 53220/88**

(43) Date of publication of application:
**13.09.89 Bulletin 89/37**

(45) Publication of the grant of the patent:
**30.11.94 Bulletin 94/48**

(84) Designated Contracting States:
**DE FR GB**

(56) References cited:
**EP-A- 0 276 986**
**WO-A-84/00424**
**DE-A- 1 184 497**
**US-A- 4 603 086**
**US-A- 4 698 406**

(73) Proprietor: **Shin-Etsu Chemical Co., Ltd.**
**6-1, Otemachi 2-chome**
**Chiyoda-ku Tokyo 100 (JP)**

(72) Inventor: **Arai, Masatoshi**
**11-11, Isobe 4-chome**
**Annaka-shi Gunma-ken (JP)**
Inventor: **Satoh, Shinichi**
**5-5, Isobe 3-chome**
**Annaka-shi Gunma-ken (JP)**
Inventor: **Fujioka, Kazutoshi**
**12-37, Isobe 3-chome**
**Annaka-shi Gunma-ken (JP)**

(74) Representative: **Baverstock, Michael George Douglas et al**
**BOULT, WADE & TENNANT**
**27 Furnival Street**
**London, EC4A 1PO (GB)**

EP 0 332 400 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a curable organopolysiloxane-based composition or, more particularly, to a photocurable organopolysiloxane-based composition capable of giving a rubbery elastomer having good heat resistance, excellent electrical properties and high weatherability and exhibiting strong adhesion to the surface of a substrate such as glass by irradiation with ultraviolet light along with stability in storage to be useful in applications as e.g. an adhesive, coating material, sealing agent, or potting agent

There are known various types of organopolysiloxane compositions capable of being cured into a silicone rubber having excellent heat and cold resistance, weatherability and electrical properties. In addition to the most classical organopolysiloxane compositions capable of being cured by an organic peroxide as a curing agent, photocurable organopolysiloxane compositions capable of being cured by irradiation with light in the presence of a photoinitiator are also known in the art of silicones. Known types of the photocurable organopolysiloxane compositions include those comprising a vinyl group-containing organopolysiloxane and a mercapto group-containing organopolysiloxane curable by the photochemical addition reaction between the vinyl groups and the mercapto groups disclosed in Japanese Patent Publication 52-40334 and Japanese Patent Kokai 60-104158 and those comprising an acrylic group-containing organopolysiloxane curable by irradiation with light in the presence of a photosensitizer disclosed in Japanese Patent Publication 53-36515 and Japanese Patent Kokai 60-215009. The vinylmercapto type organopolysiloxane compositions are defective in their very unpleasant odor and corrosiveness against metals due to the mercapto groups so that the application field of these compositions is limited. The acrylic-curable organopolysiloxane compositions have a problem that a rubbery elastomer can be obtained from the composition only by using an organopolysiloxane of a linear molecular structure with an extremely large molecular weight while the photocurability of such a high polymer is poor due to the relatively small number of the crosslinkable acrylic groups at or near the molecular chain ends in addition to the problem that atmospheric oxygen has a retarding effect on the photo-induced curing reaction of the organopolysiloxane so that fully cured layers are hardly obtained on the surface in contact with air. These problems limit the applicability of the acrylic-curable organopolysiloxane compositions only to a resinous product having a three-dimensionally branched molecular structure capable of having a relatively large number of the terminal acrylic groups and no satisfactory rubbery elastomers can be obtained from the compositions curable by this mechanism.

Though advantageous in respect of the high velocity of curing by irradiation with light as compared with organopolysiloxane compositions of other types curable by different principles, another disadvantage in photocurable organopolysiloxanes in general, which limits the applicability of the compositions, is the poor adhesion of the cured composition to the surface of the substrate on which the composition has been cured.

The present invention seeks to provide a and improved organopolysiloxane composition capable of being cured by the mechanism of a photo-induced crosslinking reaction or of the combination of a photo-induced crosslinking reaction and crosslinking by a condensation reaction to give a gel-like material or a rubbery elastomer exhibiting good adhesion to the substrate surface and freed from the above described disadvantages in the prior art compositions.

Thus, the curable organopolysiloxane composition of the present invention comprises, in admixture:

(a) 100 parts by weight of in organopolysiloxane having, in a molecule, a group represented by the general formula

$$[CH_2=CR^1\text{-CO-O-}(CH_2)_a\text{-SiR}_2\text{-O}]_b(X)_c(R)_{3-b-c}\text{Si-R}^2\text{-}, \qquad (I)$$

in which $R^1$ is a hydrogen atom or a methyl group, each R is a monovalent hydrocarbon group, X is a hydrolyzable group, $R^2$ is an oxygen atom or a divalent hydrocarbon group, the subscript a is 1, 2 or 3, the subscript b is 1, 2 or 3 and the subscript c is 0, 1 or 2 with the proviso that b + c is 2 or 3, bonded to the silicon atom forming the siloxane linkage of the organopolysiloxane;

(b) from 0.01 to 10 parts by weight of an organosilane compound represented by the general formula

$$(R^3O)_{3-w}(R^3)_w\text{Si-R}^4\text{-Z}, \qquad (II)$$

in which $R^3$ is a monovalent hydrocarbon group having 1 to 9 carbon atoms, the subscript w is zero or 1, $R^4$ is a divalent hydrocarbon group having 1 to 8 carbon atoms and Z is a group selected from the groups of the formula -NH-Y, groups of the formula $-NR^3_2$ and N-morpholino group, $R^3$ having the same meaning as defined above and Y being a hydrogen atom, a substituted or unsubstituted monovalent hydrocarbon group or a group represented by the general formula

$-CO-O-R^4-O-CO-CR^5=CH_2$, (III)

in which $R^4$ has the same meaning as defined above and $R^5$ is a hydrogen atom or a monovalent hydrocarbon group having 1 to 8 carbon atoms, or a partial hydrolysis product thereof; and

(c) from 0.01 to 10 parts by weight of a photoinitiator.

Additionally, the composition may further comprise:

(d) a catalyst for the silanol condensation reaction, especially, when the subscript c in the general formula (I) is not zero. This may be present in an amount in the range from 0.01 to 5 parts by weight per 100 parts by weight of the component (a).

The principal ingredient in the inventive organopolysiloxane composition is the component (a) which is an organopolysiloxane having, in a molecule, at least one group represented by the general formula

$[CH_2=CR^1-CO-O-(CH_2)_a-SiR_2-O]_b(X)_c(R)_{3-b-c}Si-R^2-$. (I)

In the formula, $R^1$ is a hydrogen atom or a methyl group to give an acryloxy group and methacryloxy group, respectively. The group denoted by R is, each independently from the others, a monovalent hydrocarbon group exemplified by alkyl groups, e.g., methyl, ethyl, propyl and butyl groups, cycloalkyl groups, e.g., cyclohexyl group, alkenyl groups, e.g., vinyl and allyl groups, and aryl groups, e.g., phenyl and tolyl groups, as well as substituted monovalent hydrocarbon groups obtained by replacing a part or all of the hydrogen atoms in the above named hydrocarbon groups with halogen atoms, cyano groups exemplified by chloromethyl, 3,3,3-trifluoropropyl and 2-cyanoethyl groups. The group denoted by X is a hydrolysable group exemplified by acyloxy groups, e.g., acetoxy, octanoyloxy and benzoyloxy groups, ketoxime groups, e.g., dimethyl ketoxime, methyl ethyl ketoxime and diethyl ketoxime groups, alkoxy groups, e.g., methoxy, ethoxy and propoxy groups, alkenyloxy groups, e.g., isopropenyloxy and 1-ethyl-2-methyl vinyloxy groups, substituted amino groups, e.g., dimethylamino, diethylamino, butylamino and cyclohexylamino groups, substituted aminoxy groups, e.g., dimethyl aminoxy and diethyl aminoxy groups, and amido groups, e.g., N-methyl acetamido, N-ethyl acetamido and N-methyl benzamido groups. The group denoted by $R^2$ is an oxygen atom or, preferably, a divalent hydrocarbon group which is typically an ethylene group. The subscript a is 1, 2 or 3, the subscript b is 1, 2 or 3 and the subscript c is 0, 1 or 2 with the proviso that $b+c$ is 2 or 3. When the organopolysiloxane as the component (a) has only one of the group of the formula (I) in a molecule, the cured product of the composition would have a gel-like consistency corresponding to a penetration of, for example, about 50 to 70 as measured according to JIS K 2220 while, when the organopolysiloxane molecule has two or more of the groups of the formula (I) , the composition can be cured into a rubbery elastomer by ultraviolet irradiation alone.

Examples of the organopolysiloxane as the component (a) having at least one group expressed by the general formula (I) include those expressed by the following structural formulas, in which the symbols Me, Et, Ph, Ch and Fp denote methyl, ethyl, phenyl, cyclohexyl and 3,3,3-trifluoropropyl groups, respectively, and the subscripts p, q, r and s are each a positive integer:

$[CH_2=CH-CO-O-CH_2-SiMe_2-O-](MeO)_2Si-C_2H_4-SiMe_2-$
$-[-O-SiMe_2-]_p-[-O-SiPh_2-]_q-O-SiMe_2-C_2H_4-Si(OMe)_3$ ;

$[CH_2=CMe-CO-O-CH_2-SiMe_2-O-](Et-CMe=N-O-)(Me)Si-C_2H_4-$
$-SiMe_2-[-O-SiMe_2-]_p-[-O-SiPh_2-]_q-O-SiMe_2-$
$-C_2H_4-Si(Me)(-O-N=CMe-Et)_2$ ;

$[CH_2=CMe-CO-O-(CH_2)_3-SiMe_2-O-](Ch-NH-)(Me)Si-C_2H_4-$
$-SiMe_2-[-O-SiMe_2-]_p-O-SiMe_2-C_2H_4-Si(Me)(-NH-Ch)_2$ ;

$[CH_2=CH-CO-O-CH_2-SiMe_2-O-]_2(Me)Si-C_2H_4-SiMe_2-[-O-SiMe_2-]_p-$
$-O-SiMe_2-C_2H_4-Si(Me)(-O-SiMe_2-CH_2-O-CO-CH=CH_2)_2$ ;

$[CH_2=CMe-CO-O-CH_2-SiMe_2-O-]_3Si-C_2H_4-SiMe_2-[-O-SiMe_2-]_p-$
$-[-O-SiPh_2-]_q-O-SiMe_2-C_2H_4-Si(-O-SiMe_2-CH_2-O-CO-CMe=CH_2)_3$ ;

$[CH_2=CMe-CO-O-CH_2-SiMe_2-O-]_2(Me)Si-C_2H_4-SiMe_2-$
$-[-O-SiMe_2-]_p-[-O-SiMeFp-]_r-O-SiMe_2-C_2H_4-$
$-Si(Me)(-O-SiMe_2-CH_2-O-CO-CMe=CH_2)_2$ ;

$[CH_2=CMe-CO-O-CH_2-SiMe_2-O-]_3Si-C_2H_4-SiMePh-$
$-[-O-SiMePh-]_s-C_2H_4-Si(-O-SiMe_2-CH_2-O-CO-CMe=CH_2)_3$ ;

$[CH_2=CH-CO-O-CH_2-SiMe_2-O-]_2(Me)Si-$
$-[-O-SiMe_2-]_p-O-Si(Me)(-O-SiMe_2-CH_2-O-CO-CH=CH_2)_2$ ;

and

$[CH_2=CMe-CO-O-(CH_2)_3-SiMe_2-O-]_2(Me)Si-$
$-[-O-SiPh_2-]_q-O-Si(Me)[-O-SiMe_2-(CH_2)_3-O-CO-CH=CH_2]_2$ .

The above described organopolysiloxanes suitable as the component (a) can be synthesized, for example, in a following method. In the first place, an organo chlorosilane represented by the general formula

$H-Si(Cl)_b(R)_{3-b}$, (IV)

in which R and b each have the same meaning as defined above, is reacted with an organopolysiloxane having, in a molecule, at least one group represented by the general formula

$CH_2=CH-(R^6)_d-SiR_2-O-$, (V)

in which $R^6$ is a divalent hydrocarbon group and the subscript d is 0 or 1, at 50 to 80 °C in the presence of a platinum compound such as chloroplatinic acid in the form of an isopropyl alcohol solution as the catalyst to give a modified organopolysiloxane having at least one group represented by the general formula

$(Cl)_b(R)_{3-b}Si-CH_2CH_2-(R^6)_d-SiR_2-O-$. (VI)

The chlorosilane compound of the formula (IV) is exemplified by dimethyl chlorosilane, methyl dichlorosilane, trichlorosilane and the like and the organopolysiloxane having the group of the formula (V) is exemplified by those expressed by the following structural formulas, in which the symbols Me, Ph, Vi, All and Fp denote methyl, phenyl, vinyl, allyl and 3,3,3-trifluoropropyl groups, respectively, and the subscripts

p, q, r, s and t are each a positive integer:

$$CH_2=CH-SiMe_2-(O-SiMe_2)_p-CH=CH_2;$$

$$CH_2=CH-SiMe_2-(O-SiMe_2)_p-(O-SiPh_2)_q-O-SiMe_2-CH=CH_2;$$

$$CH_2=CH-SiMe_2-(O-SiMe_2)_p-(O-SiMeFp)_r-O-SiMe_2-CH=CH_2;$$

$$CH_2=CH-SiMe_2-(O-SiMe_2)_p-(O\ SiMeVi)_s-O-SiMe_2-CH=CH_2;$$

$$(CH_2=CH-)(Me)(Ph)Si-(O-SiMe_2)_p-(O-SiPh_2)_q-O-Si(Me)(Ph)(-CH=CH_2);\ \text{and}$$

$$CH_2=CH-SiMe_2-(O-SiMe_2)_p-(O-SiMeAll)_t-O-SiMe_2-CH=CH_2.$$

The modified organopolysiloxane having the group of the formula (VI) is exemplified by those expressed by the following formulas:

$$(Cl)_2(Me)Si-C_2H_4-SiMe_2-(O-SiMe_2)_p-C_2H_4-Si(Me)(Cl)_2;$$

$$(Cl)(Me)_2Si-C_2H_4-SiMe_2-(O-SiMe_2)_p-C_2H_4-Si(Me)_2(Cl);$$

$$(Cl)_3Si-C_2H_4-SiMe_2-(O-SiMe_2)_p-(O-SiPh_2)_q-O-SiMe_2-Si(Cl)_3;$$

$$(Cl)_2(Me)Si-C_2H_4-SiMe_2-(O-SiMe_2)_p-(O-SiMeFp)_r-O-SiMe_2-C_2H_4-Si(Me)(Cl)_2;$$

$$(Me)_3Si-(O-SiMe_2)_p-(O-Si(Me)(-C_2H_4-SiCl_3))_t-O-Si(Me)_3.$$

In the next place, the thus obtained modified organopolysiloxane having one or more of silicon-bonded chlorine atoms at the molecular chain ends is reacted with a (meth)acryloxyalkyl-containing silanol compound of the general formula

$CH_2=CR^1-CO-O-(CH_2)_a-SiR_2-OH$,  (VII)

in which $R^1$, R and a each have the same meaning as defined above, such as acryloxymethyl dimethyl silanol, 3-acryloxypropyl dimethyl silanol, methacryloxymethyl dimethyl silanol, and 3-methacryloxypropyl dimethyl silanol, in an approximately equimolar amount to the chlorine atoms in the modified organopolysiloxane to effect the dehydrochlorination reaction at room temperature in the presence of an acid acceptor such as triethyl amine. When the amount of the silanol compound of the formula (VII) is smaller than equimolar to the chlorine atoms, some of the chlorine atoms are left as unreacted so that such chlorine atoms are further subjected to a second dehydrochlorination reaction with an organic compound having an active hydrogen atom such as methyl alcohol, ethyl alcohol, methyl ethyl ketoxime, N-diethyl hydroxylamine, and hexyl amine in the presence of an acid acceptor to introduce the hydrolyzable groups denoted by X into the organopolysiloxane.

The second essential ingredient in the inventive organopolysiloxane composition is the component (b) which is a di- or trialkoxy organosilane compound represented by the general formula

$(R^3O)_{3-w}R^3_wSi-R^4-Z$,  (II)

which serves to improve the adhesive bonding strength of the cured composition to the substrate surface on which the composition has been cured. In the formula (II), $R^3$ is a monovalent hydrocarbon group having 1 to 9 carbon atoms or, preferably, a methyl or ethyl group, the subscript w is zero or 1, $R^4$ is a divalent

hydrocarbon group having 1 to 8 carbon atoms or, preferably, an alkylene group and Z is a group selected from the class consisting of the groups of the formula -NH-Y, groups of the formula $-NR^3_2$ and N-morpholino group, $R^3$ having the same meaning as defined above and Y being a hydrogen atom, a substituted or unsubstituted monovalent hydrocarbon group or a group represented by the general formula

$-CO-O-R^4-O-CO-CR^5=CH_2$, (III)

in which $R^4$ has the same meaning as defined above and $R^5$ is a hydrogen atom or a monovalent hydrocarbon group having 1 to 8 carbon atoms or, preferably, a methyl group. A partial hydrolysis product of such a trialkoxy silane is also suitable.

Examples of the trialkoxy silane compound of the general formula (II), in which Z is -NHY with Y being a hydrogen atom or an unsubstituted or substituted monovalent hydrocarbon group, $-NR^3_2$ or an N-morpholino group include those expressed by the following structural formulas, in which the symbols Me, Et, Bu, Ph, Ch, Pn and Mp denote methyl, ethyl, butyl, phenyl, cyclohexyl, 1,4-phenylene and N-morpholino groups, respectively:

$(MeO)_3SiC_3H_6NHMe$; $(MeO)_3SiC_3H_6NHCOCH=CH_2$;
$(MeO)_3SiC_3H_6NHCH_2CH_2NH_2$; $(MeO)_3SiC_3H_6NHCH_2CH_2NHCH_2CH_2NH_2$;
$(MeO)_3SiC_3H_6NH_2$; $(MeO)_3SiC_3H_6NHC_6H_{12}NH_2$;
$(MeO)_3SiC_2H_4PnCH_2NHCH_2CH_2NH_2$; $(MeO)_3SiC_3H_6NHPh$;
$(MeO)_3SiC_3H_6NHC_3H_6NHPh$; $(MeO)_3SiC_3H_6NHCh$;
$(MeO)_3SiC_3H_6NHCH_2Ph$; $(MeO)_3SiC_3H_6NHCH_2CH=CH_2$;
$(MeO)_3SiC_3H_6NHCH_2CH_2NHCH_2CH=CH_2$; $(MeO)_2MeSiC_3H_6NH_2$;
$(EtO)_3SiC_3H_6NH_2$; $(EtO)_2MeSiC_3H_6NH_2$; $(BuO)_3SiC_3H_6NHCH_2CH_2NH_2$;
$(BuO)_2MeSiC_3H_6NHCH_2CH_2NH_2$;
$(MeO)_3SiC_3H_6NHC_2H_4NHC_3H_6Si(OMe)_3$; $(MeO)_3SiC_3H_6NMe_2$; and
$(MeO)_3SiC_3H_6Mp$.

The trialkoxy silane compound of the formula

$(R^3O)_3Si-R^4-NH-CO-O-R^4-O-CO-CR^5=CH_2$

can be easily prepared by the reaction of an isocyanatocontaining trialkoxy silane compound of the formula

$(R^3O)_3Si-R^4-N=CO$

with a hydroxyalkyl ester of an unsaturated carboxylic acid of the formula

$HO-R^4-O-CO-CR^5=CH_2$

in the presence of a condensation catalyst such as dibutyl tin maleate. Examples of such organosilane compound include those expressed by the following formulas:

$(MeO)_3Si(CH_2)_4-NH-CO-O-C_2H_4-CO-O-CH=CH_2$;
$(MeO)_3Si(CH_2)_4-NH-CO-O-C_2H_4-CO-O-CMe=CH_2$;
$(EtO)_3Si(CH_2)_3-NH-CO-O-C_2H_4-CO-O-CH=CH_2$; and
$(EtO)_3Si(CH_2)_3-NH-CO-O-C_2H_4-CO-O-CMe=CH_2$.

The amount of the component (b) in the inventive organopolysiloxane composition is in the range from 0.01 to 10 parts by weight per 100 parts by weight of the component (a). When the amount thereof is too small, substantially no advantageous effect can be obtained by the addition thereof. When the amount thereof is increased over the above mentioned upper limit, a retarding effect is caused on the curing velocity of the inventive composition by the ultraviolet irradiation.

The other essential ingredient in the inventive organopolysiloxane composition is a photoinitiator as the component (c) which serves to promote the photo-induced curing of the component (a). Any of the photoinitiator compounds known in the art can be used for the purpose including acetophenone, propiophenone, benzophenone, xanthone, fluorene, benzaldehyde, anthraquinone, triphenylamine, carbazole, 3-methyl acetophenone, 4-methyl acetophenone, 3-pentyl acetophenone, 4 -methoxy acetophenone, 3-bromo acetophenone, 4-allyl acetophenone, 1,4-diacetylbenzene, 3-methyl benzophenone, 4-methyl benzophenone, 4-chlorobenzophenone, 4,4'-dimethoxy benzophenone, 4-chloro-4'-benzyl bensophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, (1-methyl-1-hydroxy)ethyl phenyl ketone, diethoxymethyl phenyl ketone, benzylmethoxyketal, 2-chlorothioxanthone, diethylacetophenone, 1-hydroxycyclohexyl phenyl ketone, 2-methyl[4-(methylthio)-phenyl] 2-morpholino-1-propane, and 2,2-dimethoxy-2-phenyl acetophenone.

The amount of the photoinitiator as the component (c) in the inventive composition is in the range from 0.01 to 10 parts by weight per 100 parts by weight of the organopolysiloxane as the component (a). When the amount thereof is too small, substantially no curing reaction proceeds by irradiation of the composition with ultraviolet light. When the amount thereof is too large, on the other hand, adverse influences are caused on the physical properties of the cured product with a decrease in the mechanical strength.

The component (d), which is an optional ingredient in the inventive oganopolysiloxane composition, is a condensation catalyst which serves to effect more complete curing of the inventive composition primarily by ultraviolet irradiation, especially, when the organopolysiloxane as the component (a) has a hydrolyzable group denoted by X in the general formula (I) . Namely, a composition comprising such an organopolysiloxane having, in particular, only one acryloxyalkyl silanol group in a molecule as the component (a) and a condensation catalyst as the component (d) is curable in two ways and, when it is irradiated with light, the composition is converted into a gel-like cured material having adhesiveness to the substrate surface and thereafter curing reaction by the condensation reaction proceeds therein to give a fully cured rubbery elastomer retaining excellent adhesiveness to the substrate surface. Various compounds known in the art as a condensation catalyst of silicones can be used for the purpose including: metal carboxylates such as lead 2-ethylhexoate, dibutyl tin diacetate, dibutyl tin dioctoate, dibutyl tin dilaurate, butyl tin tri(2-ethylhexoate), iron 2-ethylhexoate, cobalt 2-ethylhexoate, zinc 2-ethylhexoate, manganese 2-ethylhexoate, tin (II) caprylate, tin naphthenate, tin oleate, zinc naphthenate, cobalt naphthenate, zinc stearate and the like; titanate esters such as tetrabutyl titanate, tetra(2-ethylhexyl) titanate, triethanolamine titanate, and tetraisopropenyl titanate; organotitanium compounds such as organosiloxy titanium; tin alkoxides such as dibutyl tin dimethoxide; aluminum alkoxide compounds; aminoalkyl-substituted alkoxy silanes such as 3-aminopropyl triethoxy silane, and N-(3-trimethoxysilylpropyl) ethylene diamine; amine compounds and salts thereof such as hexyl amine, and dodecyl amine phosphate; quaternary ammonium salts such as benzyl triethyl ammonium acetate; lower carboxylates of alkali metals such as potassium acetate, sodium acetate, and lithium oxalate; dialkyl hydroxylamines such as dimethyl hydroxylamine, and diethyl hydroxylamine; tetramethyl guanidine and guanidino-substituted organosilicon compounds such as those of the formulas $(Me_2N-)_2C=N-C_3H_6Si-(OMe)_3$ and

$$Me_3Si-O-(-SiMeG-O-)_2-SiMe_3 ,$$

in which Me is a methyl group and G is a group of the for mula $(Me_2N)_2C=N-C_3H_6-$. These compounds can be used either singly or as a combination of two kinds or more according to need. Particularly preferable compounds among them are the guanidine compounds and guanidino-substituted organosilane and organopolysiloxane compounds in respect of their activity to smoothly promote the curing reaction of the composition and the effect of improving the adhesion of the cured composition to the substrate surface. The amount of the condensation catalyst in the inventive organopolysiloxane composition is, when added, in the range from 0.01 to 5 parts by weight or, preferably, from 0.05 to 2 parts by weight per 100 parts by weight of the organopolysiloxane as the component (a). When the amount thereof is too small, no advantageous effect can be obtained by the addition thereof as a matter of course so that a long time may be taken for complete curing of the composition, in particular, in the core portion of a large block of the composition. When the amount thereof is too large, on the other hand, a phenomenon of surface filming takes place prematurely within a relatively short time to cause certain inconveniences in the works therewith in addition to the disadvantage in the decreased heat resistance and weatherability of the cured composition.

The curable organopolysiloxane composition of the invention can be prepared by uniformly blending the above described essential components (a) to (c) and optional component (d) in the above specified proportion. It is further optional according to need that the composition is admixed with a filler such as a fumed silica filler in such a limited amount that no substantial decrease is caused in the transparency of the composition since otherwise the curing velocity by the irradiation with light may be greatly decreased. It is further optional with an object to improve various properties of the composition either before or after curing that the composition is admixed with various additives such as thixotropy-imparting agents, heat resistance improvers, and coloring agents.

The photocurable organopolysiloxane composition of the invention prepared in the above described manner is highly sensitive to ultraviolet and rapidly cured by the irradiation with ultraviolet light for a very short time of 1 to 20 seconds depending on the intensity of the ultraviolet irradiation to give a rubbery cured material which is firmly bonded adhesively to the substrate surface on which it has been cured. Accordingly, the inventive organopolysiloxane composition is useful as a potting agent, sealing agent, or coating agent of electric and electronic components manufactured in a line production system.

In the following, the photocurable organopolysiloxane composition of the invention is described in more detail by way of examples as preceded by a description of the synthetic preparation of the organopolysiloxane as the component (a). In the following description, the term "parts" always refers to "parts by weight" and the values of viscosity are all obtained by measurement at 25 °C.

Synthetic Preparation 1

Into a flask of 2 liter capacity equipped with a thermometer, reflux condenser and stirrer were introduced 1000 g of an α,ω-divinyl dimethylpolysiloxane having a viscosity of 1000 centistokes and expressed by the formula

$$Vi-SiMe_2-O-(-SiMe_2-O-)_{250}-SiMe_2-Vi,$$

in which Vi and Me denote vinyl and methyl groups, respectively, containing 0.018 mole of vinyl groups per 100 g and, after dehydration of the organopolysiloxane by heating for 2 hours at 120 °C under a stream of nitrogen gas and cooling, 0.1 g of an isopropyl alcohol solution of chloroplatinic acid in a concentration of 2% by weight as platinum and 12.3 g of methyl dichlorosilane were added to the flask. The reaction mixture was heated at 90 °C for 2 hours to effect the reaction and then freed from the unreacted methyl dichlorosilane by bubbling nitrogen gas thereinto at the same temperature.

Thereafter, 17.2 g of acryloxymethyl dimethyl silanol were added dropwise to the reaction mixture with addition of 23.8 g of triethyl amine and 0.4 g of 2,6-di(tert-butyl)-4-methyl phenol taking 30 minutes and the reaction mixture was kept at 60 °C for 2 hours to effect the reaction. After completion of the reaction, the reaction mixture was diluted by adding 500 g of toluene and the precipitates of the salt were removed by filtration. The filtrate was freed from the toluene and the excess of triethyl amine by stripping at 100 °C under a reduced pressure of 267 Pa (2 mmHg) to give 920 g of a clear and colorless modified organopolysiloxane having a viscosity of 3400 centistokes, which is referred to as the polysiloxane I hereinbelow, as a product. This product organopolysiloxane is expressed by the formula

$$(CH_2=CH-CO-O-CH_2-SiMe_2-O-)_2MeSi-C_2H_4-SiMe_2-$$
$$-O-(-SiMe_2-O-)_{250}-SiMe_2-C_2H_4-$$
$$-SiMe(-O-SiMe_2-CH_2-O-CO-CH=CH_2)_2.$$

Synthetic Preparation 2.

Into a flask of 2 liter capacity equipped with a thermometer, reflux condenser and stirrer were introduced 1000 g of an α,ω-divinyl dimethyldiphenylpolysiloxane having a viscosity of 3400 centistokes and expressed by the formula

$$Vi-SiMe_2-O-(-SiMe_2-O-)_{175}-(-SiPh_2-O-)_{75}-SiMe_2-Vi,$$

in which Vi, Ph and Me denote vinyl, phenyl and methyl groups, respectively, containing 0.018 mole of vinyl groups per 100 g and, after dehydration of the organopolysiloxane by heating for 2 hours at 120 °C under a stream of nitrogen gas and cooling, 0.1 g of an isopropyl alcohol solution of chloroplatinic acid in a concentration of 2% by weight as platinum and 12.2 g of methyl dichlorosilane were added to the flask. The reaction mixture was heated first at 50 °C for 1 hour and then at 80 °C for 3 hours to effect the reaction and then freed from the unreacted methyl dichlorosilane by bubbling nitrogen gas thereinto at the same temperature.

Thereafter, 34.1 g of acryloxymethyl dimethyl silanol were added dropwise to the reaction mixture with addition of 21.5 g of triethyl amine and 0.4 g of 2,6-di(tert-butyl)-4-methyl phenol taking 30 minutes and the reaction mixture was kept at 60 °C for 2 hours to effect the reaction. After completion of the reaction, the reaction mixture was filtered to remove the precipitates of the salt formed by the reaction. The filtrate was freed from the excess of triethyl amine by stripping at 100 °C under a reduced pressure of 267 Pa (2 mmHg) to give 900 g of a clear and colorless modified organopolysiloxane, which is referred to as the polysiloxane II hereinbelow, as a product. This product organopolysiloxane is expressed by the formula

$$(CH_2=CH-CO-O-CH_2-SiMe_2-O-)_2MeSi-C_2H_4-SiMe_2-$$
$$-O-(-SiMe_2-O-)_{175}-(-SiPh_2-O-)_{75}-SiMe_2-C_2H_4-$$
$$-SiMe(-O-SiMe_2-CH_2-O-CO-CH=CH_2)_2.$$

Synthetic Preparation 3.

The procedure was substantially the same as in Synthetic Preparation 2 described above except that the α,ω-divinyl dimethyldiphenylpolysiloxane was replaced with the same amount of another α,ω-divinyl dimethyldiphenylpolysiloxane expressed by the formula

$$Vi-SiMePh-O-(-SiMe_2-O-)_{61}-(-SiPh_2-O-)_{27}-SiMePhVi,$$

in which Vi, Ph and Me denote vinyl, phenyl and methyl groups, respectively, and the amounts of the methyl dichlorosilane, triethyl amine and acryloxymethyl dimethyl silanol were 33.8 g, 59.4 g and 94.1 g, respectively, to give 880 g of a clear and colorless product, which is referred to as the polysiloxane III hereinbelow, expressed by the following formula

$$(CH_2=CH-CO-O-CH_2-SiMe_2-O-)_2MeSi-C_2H_4-SiMePh-$$
$$-O-(-SiMe_2-O-)_{61}-(-SiPh_2-O-)_{27}-SiMePh-C_2H_4-$$
$$-SiMe(-O-SiMe_2-CH_2-O-CO-CH=CH_2)_2.$$

Synthetic preparation 4.

Into a flask of 1 liter capacity equipped with a thermometer, reflux condenser and stirrer were introduced 500 g of an α,ω-divinyl dimethyldiphenylpolysiloxane expressed by the formula

$$Vi-SiMe_2-O-(-SiMe_2-O-)_{198}-(-SiPh_2-O-)_{22}-SiMe_2-Vi,$$

in which Vi, Ph and Me denote vinyl, phenyl and methyl groups, respectively, containing 0.010 mole of vinyl groups per 100 g and, after dehydration of the organopolysiloxane by heating for 2 hours at 120 °C under a stream of nitrogen gas and cooling, 0.1 g of an isopropyl alcohol solution of chloroplatinic acid in a concentration of 2% by weight as platinum and 7.0 g of methyl dichlorosilane were added to the flask. The reaction mixture was heated first at 50 °C for 1 hour and then at 80 °C for 3 hours to effect the reaction and then freed from the unreacted methyl dichlorosilane by bubbling nitrogen gas thereinto at the same temperature.

Thereafter, 5.1 g of acryloxymethyl dimethyl silanol were added dropwise to the reaction mixture with addition of 20.0 g of triethyl amine and 0.1 g of 3,5-di-tert-butyl-4-hydroxy toluene taking 30 minutes and the reaction mixture was kept at 60 °C for 2 hours to effect the reaction. Then, 16 g of methyl alcohol were added dropwise to the reaction mixture taking 30 minutes and the mixture was heated at 60 °C for 2 hours to complete the reaction. After completion of the reaction, the reaction mixture was filtered to remove the precipitates of the salt formed by the reaction. The filtrate was freed from the excess of triethyl amine and methyl alcohol by stripping at 100 °C under a reduced pressure of 267 Pa (2 mmHg) to give 480 g of a

clear and colorless modified organopolysiloxane having a viscosity of 4240 centistokes, which is referred to as the polysiloxane IV hereinbelow, as a product. This product organopolysiloxane is expressed by the average formula

$$(CH_2=CH-CO-O-CH_2-SiMe_2-O-)(MeO)MeSi-C_2H_4-SiMe_2-$$
$$-O\text{—}(-SiMe_2-O-)_{198}\text{—}(-SiPh_2-O-)_{20}\text{—}SiMe_2-C_2H_4-SiMe(OMe)_2 .$$

Example 1 and Comparative Example 1.

An organopolysiloxane composition, referred to as the composition I hereinbelow, was prepared in Example 1 by uniformly blending 100 parts of the polysiloxane I prepared in Synthetic Preparation 1 described above, 0.5 part of 3-aminopropyl trimethoxy silane, referred to as the aminosilane I hereinbelow, and 1.0 part of 1-hydroxycyclohexyl phenyl ketone, which is referred to as the photoinitiator I hereinbelow. For comparison, another organopolysiloxane composition, referred to as the composition II hereinbelow, was prepared in comparative Example 1 in the same formulation as above excepting omission of the aminosilane I.

Each of the compositions I and II was spread in a thickness of 2 mm on a plate of 120 mm by 120 mm wide and irradiated with ultraviolet light by moving three times below an ultraviolet lamp at a velocity of 1 meter/minute so that the layer of the composition was converted into a sheet of a cured rubber of which mechanical properties were measured according to the procedure specified in JIS K 6301. Separately, the composition was used for adhesively bonding two glass plates of 25 mm wide and 75 mm long sandwiching a 1 mm thick adhesive layer each at the 10 mm long end portion, the other end of a plate extending to the reverse direction of that of the other, and the shearing adhesive bonding strength was determined. The results of these measurements were as shown in Table 1 below.

Table 1

| Composition No. | Hardness, JIS A | Tensile strength, kgf/cm² | Ultimate elongation, % | Shearing adhesive bonding strength, glass, kgf/cm² | Cohesive failure by adhesion test, % |
|---|---|---|---|---|---|
| I | 34 | 5.0 | 60 | 2.5 | 100 |
| II ‡ | 34 | 4.9 | 40 | 0.3 | 0 |
| III | 14 | 2.0 | 70 | 2.0 | 100 |
| IV | 20 | 4.5 | 140 | 4.3 | 100 |
| V | 27 | 11 | 130 | 6.5 | 100 |
| VI ‡ | 15 | 2.0 | 70 | 1.3 | 0 |
| VII ‡ | 20 | 4.3 | 130 | 0.2 | 0 |
| VIII ‡ | 30 | 12 | 150 | 0.3 | 0 |
| IX | 27 | 5.2 | 100 | 2.3 | 100 |
| X | 40 | 25 | 170 | 9.0 | 100 |
| XI | 40 | 25 | 170 | 9.5 | 100 |
| XII | 35 | 2.5 | 50 | 2.0 | 100 |
| XIII ‡ | 36 | 2.5 | 40 | 0.2 | 0 |
| XIV | 30 | 5.6 | 100 | 2.9 | 100 |
| XV ‡ | 30 | 6.0 | 110 | 0.4 | 0 |
| XVI | 25 | 11 | 110 | 4.4 | 100 |
| XVII | 31 | 22 | 150 | 15.0 | 100 |
| XVIII | 30 | 3.0 | 50 | 2.4 | 100 |
| XIX ‡ | 27 | 10 | 100 | 1.1 | 0 |
| XX ‡ | 30 | 23 | 150 | 1.5 | 0 |
| XXI ‡ | 30 | 3.0 | 50 | 0.4 | 0 |
| XXII | 35 | 25 | 170 | 12.5 | 100 |
| XXIII | 36 | 24 | 150 | 13.5 | 100 |
| XXIV | 36 | 25 | 150 | 14.0 | 100 |
| XXV | 35 | 25 | 160 | 12.0 | 100 |

‡ Comparative Examples

Examples 2 to 4 and Comparative Examples 2 to 4.

Three compositions, referred to as the compositions III, IV and V in Examples 2 to 4, respectively, were prepared each by uniformly blending 100 parts of the polysiloxane II prepared in the Synthetic Example 2,

0.5 part of the aminosilane I and 2.0 parts of the same photoinitiator as used in the preceding example. The compositions IV and V were further blended with 5.0 parts and 10.0 parts, respectively, of a fumed silica filler having a specific surface area of 200 $m^2/g$ and surface-treated with hexamethyl disilazane to be rendered hydrophobic, referred to as the silica I hereinbelow.

Three more compositions, referred to as the compositions VI, VII and VIII, were prepared in Comparative Examples 2 to 4, respectively, each in the same formulation as the compositions III, IV and V, respectively, excepting omission of the aminosilane I.

Each of these six compositions was subjected to the same tests as in Example 1 to give the results shown in Table 1.

Examples 5 to 8 and Comparative Example 5.

Four compositions, referred to as the compositions IX to XII hereinbelow, were prepared in Examples 5 to 8, respectively, each by uniformly blending 100 parts of one of the polysiloxanes I to III prepared in Synthetic Examples 1 to 3, one of the aminosilanes II, III and IV indicated below in an amount shown in Table 2 below and one of the photoinitiators I and II indicated below in an amount shown in Table 2 together with or without further addition of 15 parts of a fumed silica filler having a specific surface area of 200 $m^2/g$ and surface-treated with dimethyl dichlorosilane to be rendered hydrophobic. For comparison, another composition, referred to as the composition XIII hereinbelow, was prepared in Comparative Example 5 in the same formulation as the composition XII excepting omission of the aminosilane.

Aminosilane II: N-(2-aminoethyl)-3-aminopropyl trimethoxy silane
Aminosilane III: [N-(2-aminoethyl)-2-aminoethyl]-3-aminopropyl trimethoxy silane
Aminosilane IV: N-allyl-3-aminopropyl trimethoxy silane
Photoinitiator I: see Example 1
Photoinitiator II: 1-hydroxy-1-methyl ethyl phenyl ketone

Table 2

| Composition No. | Polysiloxane | Aminosilane (parts) | Photoinitiator (parts) | Silica filler |
|---|---|---|---|---|
| IX | I | II (0.5) | II (1.0) | No |
| X | II | III (0.3) | I (3.0) | Yes |
| XI | II | IV (0.3) | II (3.0) | Yes |
| XII | III | II (1.0) | II (2.0) | No |
| XIII ‡ | III | No | II (2.0) | No |

‡ Comparative Example

Each of these five compositions was subjected to the same tests as in Example 1 to give the results shown in Table 1.

Example 9 and Comparative Example 6.

A composition, referred to as the composition XIV hereinbelow, was prepared in Example 9 by uniformly blending 100 parts of the polysiloxane I, 1 part of an organosilane compound of the formula

$$(CH_3)_3SiC_3H_6\text{-NH-CO-O-}C_2H_4\text{-O-CO-CH}=CH_2,$$

referred to as the acryloxy silane I hereinbelow, and 2 parts of the photoinitiator II.

For comparison, another composition, referred to as the composition XV hereinbelow, was prepared in Comparative Example 6 in the same formulation as above excepting omission of the acryloxy silane I.

Each of these compositions was subjected to the same tests as in Example 1 to give the results shown in Table 1. In this case, the ultraviolet irradiation of the composition was performed using two ultraviolet lamps of 80 watts/cm output from an ultraviolet irradiation apparatus Model UD-20-2 manufactured by Nippon Denchi Co. to find that curing was complete within 2 to 4 seconds.

Examples 10 to 12 and Comparative Examples 7 to 9.

Compositions XVI to XVIII were prepared in Examples 10 to 12, respectively, each by uniformly blending 100 parts of the polysiloxane II (compositions XVI and XVII) or III (composition XVIII), 1 part (compositions XVI and XVII) or 0.5 part (composition XVIII) of the acryloxy silane I and 3 parts of the photoinitiator I without (composition XVIII) or with further addition of 4 parts (composition XVI) or 15 parts (composition XVII) of the silica filler I. The formulations of the compositions XIX to XXI prepared in Comparative Examples 7 to 9, respectively, were each the same as for the compositions XVI to XVIII, respectively, excepting omission of the acryloxy silane I.

These compositions XVI to XXI were each subjected to the same tests of ultraviolet-induced curing and measurements of the properties as in Example 1 to give the results shown in Table 1

Examples 13 to 16.

Four compositions, referred to as the compositions XXII to XXV hereinbelow, were prepared each by uniformly blending 100 parts of the polysiloxane II obtained in Synthetic Preparation 2, 3 parts of the photoinitiator I, 15 parts of a fumed silica filler having a specific surface area of 300 $m^2/g$ and surface-treated with hexamethyl disilazane to be rendered hydrophobic, referred to as the silica filler III hereinbelow, and 0.5 part of the acryloxy silane II (see below), 1.0 part of the acryloxy silane III (see below), 2.0 parts of the acryloxy silane IV (see below) or 1.0 part of the aminosilane I, i.e. 3-aminopropyl trimethoxy silane, respectively.

Acryloxy silane II

$(CH_3)_3Si\text{-}C_3H_6\text{-}NH\text{-}CO\text{-}O\text{-}CH_2\text{-}CH_2\text{-}O\text{-}CO\text{-}C(CH_3) = CH_2$

Acryloxy silane III

$(CH_3)_3Si\text{-}C_3H_6\text{-}NH\text{-}CO\text{-}O\text{-}CH_2\text{-}CH(CH_3)\text{-}O\text{-}CO\text{-}CH = CH_2$

Acryloxy silane IV

$(C_2H_5)_3Si\text{-}C_3H_6\text{-}NH\text{-}CO\text{-}O\text{-}CH_2\text{-}CH_2\text{-}O\text{-}CO\text{-}CH = CH_2$

These compositions were kept at 70 °C for 7 days without noticeable increase in the consistency. Further, they were each subjected to the tests of curing and measurements of the properties in the same manner as in Example 1 to give the results shown in Table 1

Examples 17 to 21 and Comparative Examples 10 and 11

Five compositions, referred to as the compositions XXVI to XXX hereinbelow, were prepared in Examples 17 to 21, respectively, each by uniformly blending 100 parts of the polysiloxane IV obtained in Synthetic Preparation 4 with a photoinitiator, which was the photoinitiator II or diethoxymethyl phenyl ketone, referred to as the photoinitiator III hereinbelow, dibutyl tin dimethoxide or dibutyl tin dioctoate, referred to as the condensation catalysts I and II, respectively, hereinbelow, and N,N'-bis(3-trimethoxysilylpropyl) ethylene diamine as an adhesion improver each in an amount shown in Table 3 below. Two more compositions, referred to as the compositions XXXI and XXXII hereinbelow, were prepared in Comparative Examples 10 and 11, respectively, each in a similar formulation to one of the compositions XXVI to XXX above but with omission of the adhesion improver as shown in Table 3.

Table 3

| Composision No. | XXVI | XXVII | XXVIII | XXIX | XXX | ǂ XXXI | ǂ XXXII |
|---|---|---|---|---|---|---|---|
| Photo-initiator (parts) | II (1.0) | II (3.0) | III (1.0) | III (3.0) | III (3.0) | II (1.0) | II (1.0) |
| Condensation catalyst (parts) | I (0.5) | I (1.0) | II (0.5) | I (0.1) | II (0.2) | I (0.5) | II (0.5) |
| Adhesion improver, parts | 1.0 | 2.0 | 2.0 | 1.0 | 1.0 | - | - |
| Penetration *) | 72 | 61 | 75 | 58 | 78 | 72 | 70 |
| Hardness, JIS A | 18 | 20 | 18 | 15 | 16 | 15 | 12 |
| Tensile strength, kgf/cm$^2$ | 6.5 | 7.8 | 5.1 | 3.2 | 3.8 | 4.0 | 3.0 |
| Ultimate elongation, % | 110 | 120 | 90 | 70 | 80 | 80 | 90 |

*) JIS K 2220

ǂ Comparative Examples

Petri dishes of 10 mm depth were each filled with one of these compositions XXVI to XXXII which was irradiated with ultraviolet light in a dose of 4.5 J/cm$^2$ from an ultraviolet irradiation apparatus (Model ASE-20 manufactured by Nippon Denchi Co.) so that the composition was converted into a gel-like form of which penetration was measured immediately after irradiation according to the procedure specified in JIS K 2220.

Separately, each of these compositions was cured into a rubber sheet of 2 mm thickness by irradiation with ultraviolet light of 365 nm wavelength in a dose of 4.5 J/cm$^2$ by passing three times 10 cm below a high-pressure mercury lamp of 80 watts/cm output at a velocity of 1 meter/minute to be converted into a gel-like form which was kept standing for 7 days in an atmospher of 55% relative humidity at 20 °C so that the composition was converted into a rubbery elastomer of which mechanical properties were determined

according to the procedure specified in JIS K 6301. The results of these measurements were as shown in Table 3.

Further, each of the compositions was subjected to the test of adhesive bonding of glass plates or aluminum plates by curing under the same conditions as above to find that the adhesive bonding was good immediately after the ultraviolet irradiation but the adhesive bonding with the compositions XXXI and XXXII was poor 48 hours after the ultraviolet irradiation.

**Claims**

**1.** A photocurable organopolysiloxane composition which comprises, in admixture:

(a) 100 parts by weight of an organopolysiloxane having, in a molecule, at least one group represented by the general formula

$[CH_2=CR^1\text{-CO-O-}(CH_2)_a\text{-}SiR_2O]_b(X)_c(R)_{3-b-c}Si\text{-}R^2\text{-}$,

in which $R^1$ is a hydrogen atom or a methyl group, each R is a monovalent hydrocarbon group, X is a hydrolyzable group, $R^2$ is an oxygen atom or a divalent hydrocarbon group, the subscript a is 1, 2 or 3, the subscript b is 1, 2 or 3 and the subscript c is 0, 1 or 2 with the proviso that $b+c$ is 2 or 3, bonded to the silicon atom forming the siloxane linkage of the organopolysiloxane;

(b) from 0.01 to 10 parts by weight of an organosilane compound represented by the general formula

$(R^3O)_{3-w}(R^3)_wSi\text{-}R^4\text{-}Z$,

in which $R^3$ is a monovalent hydrocarbon group having 1 to 9 carbon atoms, the subscript w is zero or 1, $R^4$ is a divalent hydrocarbon group having 1 to 8 carbon atoms and Z is a group selected from groups of the formula -NH-Y, groups of the formula $-NR^3_2$ and N-morpholino group, $R^3$ having the same meaning as defined above and Y being a hydrogen atom, a substituted or unsubstituted monovalent hydrocarbon group or a group represented by the general formula

$\text{-CO-O-}R^4\text{-O-CO-}CR^5=CH_2$,

in which $R^4$ has the same meaning as defined above and $R^5$ is a hydrogen atom or a monovalent hydrocarbon group having 1 to 8 carbon atoms, or a partial hydrolysis product thereof; and

(c) from 0.01 to 10 parts by weight of a photoinitiator and optionally

(d) a catalyst for the silanol condensation reaction in an amount from 0.01 to 5 parts by weight.

**2.** A photocurable organopolysiloxane composition as claimed in claim 1 wherein the subscript a is 1.

**3.** A photocurable organopolysiloxane composition as claimed in claim 1 or claim 2 wherein the group denoted by R is a methyl group.

**4.** A photocurable organopolysiloxane composition as claimed in any one of claims 1 to 3 wherein the group denoted by $R^3$ is a methyl group or ethyl group.

**5.** A photocurable organopolysiloxane composition as claimed in any one of claims 1 to 4 wherein the component (b) is a compound selected from the group consisting of 3-aminopropyl trimethoxy silane, N-(2-aminoethyl)-3-aminopropyl trimethoxy silane, N-(N-(2-aminoethyl)-2-aminoethyl]-3-aminopropyl trimethoxy silane, N-allyl-3-aminopropyl trimethoxy silane, a compound of the formula $(CH_3O)_3SiC_3H_6\text{-NH-CO-O-}C_2H_4\text{-O-CO-}CH=CH_2$, a compound of the formula $(CH_3O)_3\text{-}SiC_3H_6\text{-NH-CO-O-}C_2H_4\text{-O-CO-C-}(CH_3)=CH_2$, a compound of the formula $(CH_3O)_3SiC_3H_6\text{-NH-CO-O-}CH_2\text{-}CH(CH_3)\text{-O-CO-}CH=CH_2$, a compound of the formula $(C_2H_5O)_3SiC_3H_6\text{-NH-CO-O-}C_2H_4\text{-O-CO-}CH=CH_2$ and N,N'-bis(3-trimethoxysilylpropyl) ethylene diamine.

**6.** A photocurable organopolysiloxane composition as claimed in any one of claims 1 to 5 wherein the subscript c is zero.

**7.** A photocurable organopolysiloxane composition as claimed in any one of claims 1 to 5 wherein the subscript c is 1 or 2.

**8.** A photocurable organopolysiloxane composition as claimed in claim 7 wherein the group denoted by X is selected from acyloxy groups, ketoxime groups, alkoxy groups, alkenyloxy groups, substituted amino groups, substituted aminoxy groups and amido groups.

**9.** A photocurable organopolysiloxane composition as claimed in claim 7 or claim 8 wherein the group denoted by X is selected from the class consisting of acetoxy, octanoyloxy, benzoyloxy, dimethylketoxime, methylethylketoxime, diethylketoxime, methoxy, ethoxy, propoxy, isopropenyloxy, 1-ethyl-2-methyl vinyloxy, dimethylamino, diethylamino, butylamino, cyclohexylamino, dimethylaminoxy, diethylaminoxy, N-methyl-acetamido, N-ethylacetamido and N-methylbenzamido groups.

**10.** A photocurable organopolysiloxane composition as claimed in any one of claims 1 to 9 wherein the group denoted by $R^2$ is an ethylene group.

**11.** A photocurable organopolysiloxane composition as claimed in any one of claims 1 to 10 wherein the organopolysiloxane as the compound (a) has one and only one group represented by the formula

$$[CH_2=CR^1\text{-CO-O-}(CH_2)_a\text{-}SiR_2\text{-O}]_b(X)_c(R)_{3-b-c}Si\text{-}R^2\text{-}$$

in a molecule.

**12.** A photocurable organopolysiloxane composition as claimed in any one of claims 1 to 10 wherein the organopolysiloxane as the component (a) has a linear molecular structure and has two groups each represented by the formula

$$[CH_2=CR^1\text{-CO-O-}(CH_2)_a\text{-}SiR_2\text{-O}]_b(X)_c(R)_{3-b-c}Si\text{-}R^2\text{-}$$

at both molecular chain ends in a molecule.

**13.** The use of a photocurable organopolysiloxane composition as claimed in any one of claims 1 to 12 as a potting agent, a sealing agent or a coating agent.

## Patentansprüche

**1.** Lichthärtbare Polyorganosiloxan-Zusammensetzung, die im Gemisch enthält:

(a) 100 Gew.-Teile eines Polyorganosiloxans, das im Molekül mindestens eine Gruppe der allgemeinen Formel

$$[CH_2=CR^1\text{-CO-O-}(CH_2)_aSiR_2\text{-O}]_b(X)_c(R)_{3-b-c}Si\text{-}R^2\text{-}$$

enthält, in der bedeuten:

R' ein Wasserstoffatom oder Methyl,
R jeweils eine einwertige Kohlenwasserstoffgruppe,
X eine hydrolysierbare Gruppe,
$R^2$ ein Sauerstoffatom oder eine zweiwertige Kohlenwasserstoffgruppe,

der Index a 1, 2 oder 3,
der Index b 1, 2 oder 3 und
der Index c 0, 1 oder 2,
mit der Maßgabe, daß b + c 2 oder 3 ist,
die an das die Siloxanbindung des Polyorganosiloxans bildende Siliciumatom gebunden ist;

(b) 0,01 bis 10 Gew.-Teile einer Organosilanverbindung der allgemeinen Formel

$$(R^3O)_{3-w}(R^3)_w\ Si\text{-}R^4\text{-}Z,$$

in der bedeuten:

$R^3$ eine einwertige Kohlenwasserstoffgruppe mit 1 bis 9 Kohlenstoffatomen,

der Index w 0 oder 1,

$R^4$ eine zweiwertige Kohlenwasserstoffgruppe mit 1 bis 8 Kohlenstoffatomen und

Z eine Gruppe, die ausgewählt ist unter den Gruppen der Formel -NH-Y, Gruppen der Formel $-NR^3_2$ und N-Morpholino, wobei $R^3$ dasselbe wie oben bedeutet und Y ein Wasserstoffatom, eine substituierte oder unsubstituierte einwertige Kohlenwasserstoffgruppe oder eine Gruppe der allgemeinen Formel

$$-CO-O-R^4-O-CO-CR^5=CH_2$$

darstellt, in der $R^4$ das gleiche wie oben und $R^5$ ein Wasserstoffatom oder eine einwertige Kohlenwasserstoffgruppe mit 1 bis 8 Kohlenstoffatomen bedeuten,

oder eines partiellen Hydrolyseprodukts davon

und

(c) 0,01 bis 10 Gew.-Teile eines Photoinitiators

sowie wahlweise

(d) einen Katalysator der Silanolkondensationsreaktion in einer Menge von 0,01 bis 5 Gew.-Teilen.

**2.** Lichthärtbare Polyorganosiloxan-Zusammensetzung nach Anspruch 1, wobei der Index a gleich 1 ist.

**3.** Lichthärtbare Polyorganosiloxan-Zusammensetzung nach Anspruch 1 oder 2, wobei die Gruppe R Methyl bedeutet.

**4.** Lichthärtbare Polyorganosiloxan-Zusammensetzung nach einem der Ansprüche 1 bis 3, wobei die Gruppe $R^3$ Methyl oder Ethyl bedeutet.

**5.** Lichthärtbare Polyorganosiloxan-Zusammensetzung nach einem der Ansprüche 1 bis 4, wobei die Komponente (b) eine Verbindung ist, die ausgewählt ist unter 3-Aminopropyltrimethoxysilan, N-(2-Aminoethyl)-3-aminopropyltrimethoxysilan, N-[N-(2-Aminoethyl)-2-aminoethyl]-3-aminopropyltrimethoxysilan, N-Allyl-3-aminopropyltrimethoxysilan, der Verbindung der Formel $(CH_3O)_3SiC_3H_6-NH-CO-O-C_2H_4-O-CO-CH=CH_2$, der Verbindung der Formel $(CH_3O)_3-SiC_3H_6-NH-CO-O-C_2H_4-O-CO-C(CH_3)=CH_2$, der Verbindung der Formel $(CH_3O)_3SiC_3H_6-NH-CO-O-CH_2-CH(CH_3)-O-CO-CH=CH_2$, der Verbindung der Formel $(C_2H_5O)_3SiC_3H_6-NH-CO-O-C_2H_4-O-CO-CH=CH_2$ und N,N'-Bis(3-trimethoxysilylpropyl)-ethylendiamin.

**6.** Lichthärtbare Polyorganosiloxan-Zusammensetzung nach einem der Ansprüche 1 bis 5, wobei der Index c gleich O ist.

**7.** Lichthärtbare Polyorganosiloxan-Zusammensetzung nach einem der Ansprüche 1 bis 5, wobei der Index c 1 oder 2 bedeutet.

**8.** Lichthärtbare Polyorganosiloxan-Zusammensetzung nach Anspruch 7, wobei die Gruppe X unter Acyloxygruppen, Ketoximgruppen, Alkoxygruppen, Alkenyloxygruppen, substituierten Aminogruppen, substituierten Aminoxygruppen und Amidogruppen ausgewählt ist.

**9.** Lichthärtbare Polyorganosiloxan-Zusammensetzung nach Anspruch 7 oder 8, wobei die Gruppe X ausgewählt ist unter Acetoxy, Octanoyloxy, Benzoyloxy, Dimethylketoxim, Methylethylketoxim, Diethylketoxim, Methoxy, Ethoxy, Propoxy, Isopropenyloxy, 1-Ethyl-2-methylvinyloxy, Dimethylamino, Diethylamino, Butylamino, Cyclohexylamino, Dimethylaminoxy, Diethylaminoxy, N-Methylacetamido, N-Ethylacetamido und N-Methylbenzamido.

**10.** Lichthärtbare Polyorganosiloxan-Zusammensetzung nach einem der Ansprüche 1 bis 9, wobei die Gruppe $R^2$ eine Ethylengruppe ist.

**11.** Lichthärtbare Polyorganosiloxan-Zusammensetzung nach einem der Ansprüche 1 bis 10, wobei das Polyorganosiloxan der Komponente (a) eine oder lediglich eine Gruppe der Formel

$$[CH_2=CR^1-CO-O-(CH_2)_a-SiR_2-O]_b(X)_c(R)_{3-b-c}Si-R^2-$$

im Molekül aufweist.

12. Lichthärtbare Polyorganosiloxan-Zusammensetzung nach einem der Ansprüche 1 bis 10, wobei das Polyorganosiloxan der Komponente (a) eine lineare Molekülstruktur besitzt und zwei Gruppen der Formel

$[CH_2=CR^1\text{-}CO\text{-}O\text{-}(CH_2)_a\text{-}SiR_2\text{-}O]_b(X)_c(R)_{3-b-c}Si\text{-}R^2\text{-}$

an den beiden Kettenenden des Moleküls aufweist.

13. Verwendung der lichthärtbaren Polyorganosiloxan-Zusammensetzungen nach einem der Ansprüche 1 bis 12 als Vergußmasse, Dichtmasse oder Beschichtungsmittel.

**Revendications**

1. Composition photodurcissable à base d'organopolysiloxane comprenant, en mélange:
   (a) 100 parties en poids d'un organopolysiloxane ayant par molécule au moins un groupe décrit par la formule générale

   $[CH_2=CR^1\text{-}CO\text{-}O\text{-}(CH_2)_a\text{-}SiR_2\text{-}O]_b(X)_c(R)_{3-b-c}Si\text{-}R^2\text{-}$,

   dans laquelle $R^1$ est un atome d'hydrogène ou un groupe méthyle, chaque R est un groupement hydrocarbure monovalent, X est un groupe hydrolysable, $R^2$ est un atome d'oxygène ou un groupement hydrocarbure divalent, l'indice a vaut 1, 2 ou 3, l'indice b vaut 1, 2 ou 3 et l'indice c vaut 0, 1 ou 2, avec la condition que b+c soit égal à 2 ou 3, lié à l'atome de silicium qui constitue la liaison siloxane de l'organopolysiloxane;
   (b) de 0,01 à 10 parties en poids d'un composé d'organosiloxane décrit par la formule générale

   $(R^3O)_{3-w}(R^3)_wSi\text{-}R^4\text{-}Z$,

   dans laquelle $R^3$ est un groupement hydrocarbure monovalent ayant 1 à 9 atomes de carbone, l'indice w vaut zéro ou 1, $R^4$ est un groupement hydrocarbure divalent ayant 1 à 8 atomes de carbone et Z est un groupe choisi parmi les groupes de la formule -NH-Y, les groupes de la formule $-NR^3_2$ et le groupe N-morpholino, $R^3$ ayant la même signification que précédemment et Y étant un atome d'hydrogène, un groupement hydrocarbure monovalent substitué ou non-substitué, ou un groupe décrit par la formule générale

   $-CO\text{-}O\text{-}R^4\text{-}O\text{-}CO\text{-}CR^5=CH_2$,

   dans laquelle $R^4$ a la même signification que précédemment et $R^5$ est un atome d'hydrogène ou un groupement hydrocarbure monovalent ayant 1 à 8 atomes de carbone, ou un produit d'hydrolyse partielle de celui-ci; et
   (c) de 0,01 à 10 parties en poids d'un photo-initiateur et, en option,
   (d) un catalyseur pour la réaction de condensation du silanol en une quantité allant de 0,01 à 5 parties en poids.

2. Composition photodurcissable à base d'organopolysiloxane selon la revendication 1, dans laquelle l'indice a est égal à 1.

3. Composition photodurcissable à base d'organopolysiloxane selon la revendication 1 ou la revendication 2, dans laquelle le groupe désigné par R est un groupe méthyle.

4. Composition photodurcissable à base d'organopolysiloxane selon l'une quelconque des revendications 1 à 3, dans laquelle le groupe désigné par $R^3$ est un groupe méthyle ou un groupe éthyle.

5. Composition photodurcissable à base d'organopolysiloxane selon l'une quelconque des revendications 1 à 4, dans laquelle le composant (b) est un composé choisi dans le groupe formé par le 3-aminopropyltriméthoxysilane, le N-(2-aminoéthyl)-3-aminopropyltriméthoxysilane, le N-[N-(2-aminoéthyl)-2-aminoéthyl]-3-aminopropyltriméthoxysilane, le N-allyl-3-aminopropyltriméthoxysilane, un composé de la formule $(CH_3O)_3SiC_3H_6$-NH-CO-O-$C_2H4$-O-CO-CH = $CH_2$, un composé de la formule $(CH_3O)_3SiC_3H_6$-NH-CO-O-$C_2H_4$-O-CO-C($CH_3$) = $CH_2$, un composé de la formule $(CH_3O)_3SiC_3H_6$-NH-CO-O-$CH_2$-CH($CH_3$)-O-CO-CH = $CH_2$,un composé de la formule $(C_2H_50)_3SiC_3H_6$-NH-CO-O-$C_2H_4$-O-CO-CH = $CH_2$ et la N,N'-bis(3-triméthoxy silylpropyl)éthylène diamine.

**6.** Composition photodurcissable à base d'organopolysiloxane selon l'une quelconque des revendications 1 à 5, dans laquelle l'indice c vaut zéro.

**7.** Composition photodurcissable à base d'organopolysiloxane selon l'une quelconque des revendications 1 à 5, dans laquelle l'indice c vaut 1 ou 2.

**8.** Composition photodurcissable à base d'organopolysiloxane selon la revendication 7, dans laquelle le groupe désigné par X est choisi parmi les groupes acyloxy, les groupes cétoxime, les groupes alcoxy, les groupes alcényloxy, les groupes amino substitués, les groupes aminoxy substitués et les groupes amido.

**9.** Composition photodurcissable à base d'organopolysiloxane selon la revendication 7 ou la revendication 8, dans laquelle le groupe désigné par X est choisi dans la classe des groupes acétoxy, octanoyloxy, benzoyloxy, diméthylcétoxime, méthyléthylcétoxime, diéthylcétoxime, méthoxy, éthoxy, propoxy, isopropényloxy, 1-éthyl-2-méthyl vinyloxy, diméthylamino, diéthylamino, butylamino, cyclohexylamino, diméthylaminoxy, diéthylaminoxy, N-méthyl acétamido, N-éthylacétamido et N-méthylbenzamido.

**10.** Composition photodurcissable à base d'organopolysiloxane selon l'une quelconque des revendications 1 à 9, dans laquelle le groupe désigné par $R^2$ est un groupement éthylène.

**11.** Composition photodurcissable à base d'organopolysiloxane selon l'une quelconque des revendications 1 à 10, dans laquelle l'organopolysiloxane en tant que composant (a) possède par molécule un et un seul groupe décrit par la formule

$$[CH_2 = CR^1\text{-CO-O-}(CH_2)_a\text{-Si}R_2\text{-O}]_b(X)_c(R)_{3-b-c}\text{Si-}R^2\text{-}$$

**12.** Composition photodurcissable à base d'organopolysiloxane selon l'une quelconque des revendications 1 à 10 dans laquelle l'organopolysiloxane utilisé comme composé (a) a une structure moléculaire linéaire et a deux groupes décrits chacun par la formule

$$[CH_2 = CR^1\text{-CO-O-}(CH_2)_a\text{-Si}R_2\text{-O}]_b(X)_c(R)_{3-b-c}\text{Si-}R^2\text{-}$$

aux deux extrémités de la chaine moléculaire d'une molécule.

**13.** Utilisation d'une composition photodurcissable à base d'organopolysiloxane selon l'une quelconque des revendications 1 à 12 comme agent d'enrobage, agent d'étanchéité ou matériau de revêtement.